# EUROPEAN PATENT APPLICATION

(11) **EP 1 677 292 A1**
(43) Date of publication of application: **05.07.2006**
(21) Application number: 04792871.8
(22) Date of filing: 22.10.2004
(51) Int. Cl.: G11B 7/09, G11B 7/13

(54) **TRACKING CONTROL DEVICE AND METHOD, FOCUS CONTROL DEVICE AND METHOD, AND SIGNAL PROCESSING DEVICE**

(30) Priority: 24.10.2003 JP 2003364247
(71) Applicant: MATSUSHITA ELECTRIC INDUSTRIAL CO., LTD., Kadoma-shi, Osaka 571-8501 (JP)
(72) Inventor: TAKAHASHI, Rie, Chuo-ku,Osaka-shi,Osaka 540-6319 (JP); WATANABE, Katsuya, Chuo-ku, Osaka-shi, Osaka 540-6319 (JP)
(74) Representative: Pautex Schneider, Nicole Véronique
(86) International application number: PCT/JP2004/015729
(87) International publication number: WO 2005/041178

(57) **Abstract**

To improve a precision of tracking control. A tracking control apparatus includes a filter section (106) including a plurality of low-pass filters (LPFs). Each of the plurality of low-pass filters (LPFs) removes components having frequencies equal to or higher than a predetermined cutoff frequency from a corresponding received light quantity signal among a plurality of received light quantity signals output from light detection means (6). The tracking control apparatus includes: a tracking error detection section (104) for generating a tracking error signal indicating an amount of deviation of an optical beam spot from a track to be scanned on a recording surface of an optical disc by performing predetermined calculations with respect to a plurality of signals output from the filter section (106) ; and a tracking control section (102) for driving moving means (101) such that the optical beam spot follows the track on the recording surface of the optical disc in accordance with the tracking error signal.

## Description

### TECHNICAL FIELD

The present invention relates to a tracking control apparatus and method which allow improving a precision of tracking control, a focus control apparatus and method which allows improving a precision of focus control, and a signal processing apparatus.

### BACKGROUND ART

Conventionally, one DVD recorder records or reproduces DVD media of a plurality of types. DVD media include DVD-RAMs which can be overwritten for several times, DVD-Rs which can be recorded but cannot be overwritten, DVD-ROMs of a reproduction-only type, and the like. Their physical standards are different from each other. Thus, an optimal method for detecting tracking errors is different for each of the DVD media.

Conventionally, a "phase difference method" and a "push-pull method" are known as a method for detecting tracking errors.

The phase difference method is a method for detecting tracking errors by utilizing changes in light quantity caused by pits or recording marks of optical discs. When, for example, DVD-ROMs and DVD-Rs are reproduced, the phase difference method is often used for detecting tracking errors.

The push-pull method is a method for detecting tracking errors by utilizing changes in light quantity caused by guide grooves of optical discs. When, for example, DVD-RAMs are recorded/reproduced or DVD-Rs are recorded, the push-pull method is often used for detecting tracking errors.

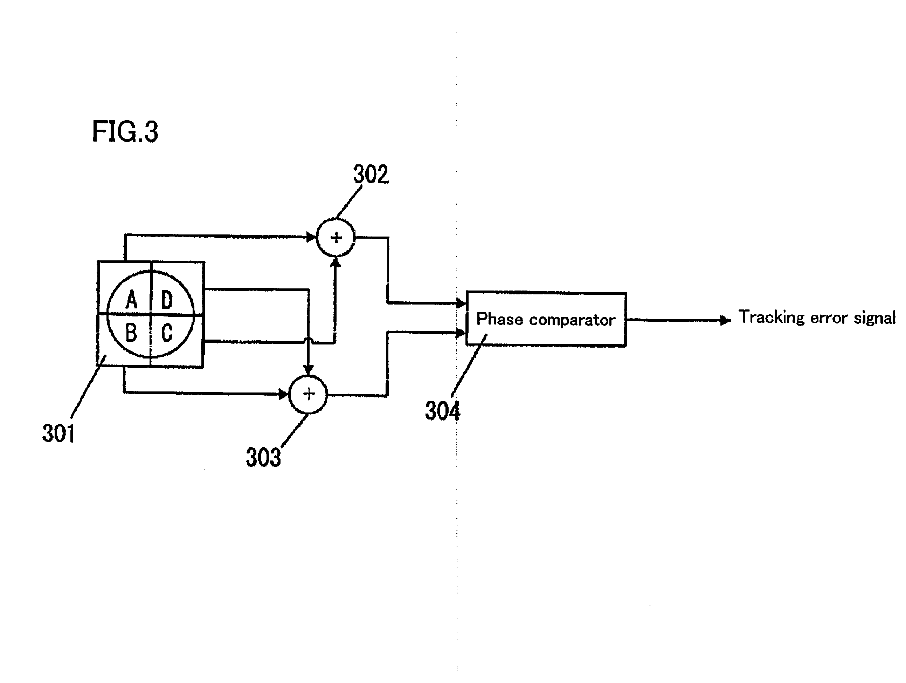

Figure 3 shows a structure of a circuit for detecting tracking errors by using the phase difference method.

A received light quantity detection section 301 receives light reflected off an optical disc. The received light quantity detection section **301** is separated into four areas A, B, C, and D by a boundary along a tangent to recording tracks of the optical disc and a boundary along the perpendicular direction. Each of the four areas A, B, C, and D is formed to generate and output a received light quantity signal in accordance with a received light quantity.

An adder **302** adds the received light quantity signal output from the area A of the received light quantity detection section 301 and the received light quantity signal output from the area C of the received light quantity detection section **301.** The areas A and C are arranged orthogonal to each other in the received light quantity detection section **301.**

An adder **303** adds the received light quantity signal output from the area B of the received light quantity detection section **301** and the received light quantity signal output from the area D of the received light quantity detection section **301.** The areas B and D are arranged orthogonal to each other in the received light quantity detection section **301.**

A phase comparator **304** detects a phase difference between the signal output from the adder **302** and the signal output from the adder **303**. The phase comparator **304** generates a tracking error signal in accordance with the phase difference.

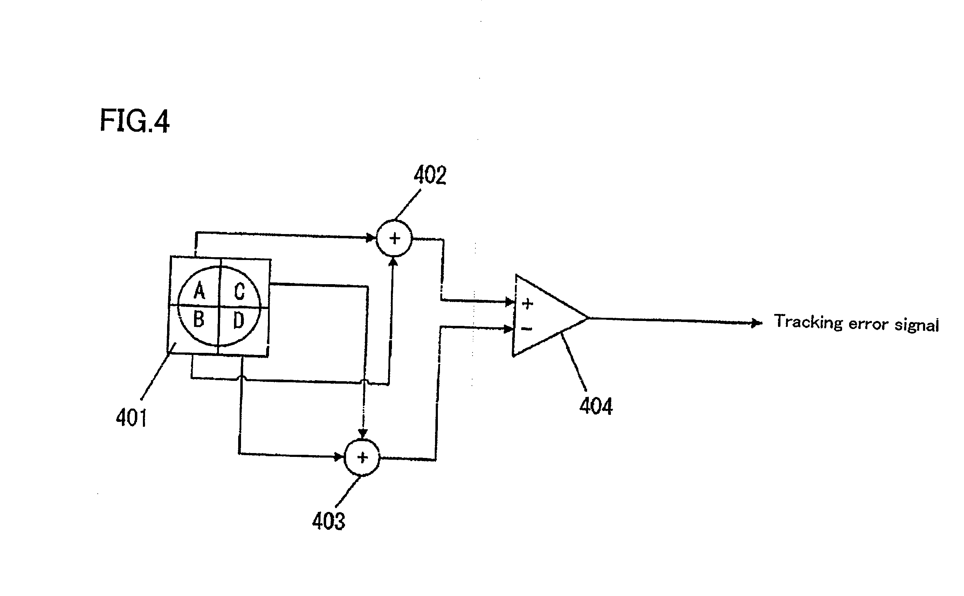

Figure **4** shows a structure of a circuit for detecting tracking errors by using the push-pull method.

A received light quantity detection section 401 has the same structure as the received light quantity detection section 301 shown in Figure 3. Specifically, the received light quantity detection section **401** receives light reflected off an optical disc. The received light quantity detection section **401** is separated into four areas A, B, C, and D by a boundary along a tangent to recording tracks of the optical disc and a boundary along the perpendicular direction. Each of the four areas A, B, C, and D is formed to generate and output a received light quantity signal in accordance with a received light quantity.

An adder **402** adds the received light quantity signal output from the area A of the received light quantity detection section **401** and the received light quantity signal output from the area B of the received light quantity detection section **401.** The areas A and B are on the same side with respect to the boundary along the tangent to the recording tracks.

An adder **403** adds the received light quantity signal output from the area C of the received light quantity detection section **401** and the received light quantity signal output from the area D of the received light quantity detection section **401.** The areas C and D are on the same side with respect to the boundary along the tangent to the recording tracks.

A subtracter **404** generates a tracking error signal by subtracting the signal output from the adder **403** from the signal output from the adder **402.**

In a DVD multidrive which requires implementing both of the tracking error detection methods, i.e., the phase difference method and the push-pull method, the received light quantity detection section is shared by the phase difference method and the push-pull method in order to reduce the size and the cost of anh optical head. Such a multidrive employs a structure in which the operational circuits following the received light quantity detection section are switched depending upon whether the error detection method is the phase difference method or the push-pull method. Such a structure is described in, for example, page 9 of Japanese Laid-Open Publication No. 2002-109759 and pages 2-4 of Japanese Laid-Open Publication No. 5-325233.

In such a structure, a circuit for detecting tracking errors using the phase difference method has to be able to detect changes in light quantity caused by pits or recording marks of the optical discs. Thus, the circuit is the one which can respond to a high frequency band. For example, in the case of DVDs, the circuit is the one which can respond to the frequency band from few MHz to as high as several tens of MHz.

When the received light quantity detection section is shared by the phase difference method and the push-pull method as described above, the response frequency of the received light quantity detection section is high. When recording is performed in a DVD multidrive, usually, a laser power is modulated. A high frequency component from tens of MHz to hundreds of MHz such as the modulation component of the laser power is superimposed on the tracking error signal.

As in the circuit for detecting tracking errors, in a circuit for detecting focus errors, the received light quantity detection section may also be shared by an RF signal system and a focus error detection system in order to reduce the size and the cost of an optical head. In such a case, a response frequency of the received light quantity detection section becomes high. Thus, A high frequency component from tens of MHz to hundreds of MHz such as the modulation component of laser power is superimposed on the focus error signal.

Usually, the tracking error signal and a focus error signal passes through a low-pass type filter called an antialiasing filter for digital control. Thus, high-frequency components of the tracking error signal and the focus error signal are removed by the antialiasing filter. Therefore, even though the above-mentioned high-frequency component is superimposed on the tracking error signal or the focus error signal, this does not cause any problem.

However , as power of laser for recording has increased for increasing the speed of the recording operation, it has become more apparent that it is necessary to account for influence of the above-mentioned high-frequency component on the tracking control or the focus control though the experiments of the present inventors. This is because it was found that the above-mentioned high-frequency component saturate the operational circuits, and the amplitude of the tracking error control and the focus control error which pass through the antialiasing filter becomes small, causing a control loop gain to be lowered and unstable.

The object of the present invention is to provide a tracking control apparatus and method which allow improving a precision of tracking control, a focus control apparatus and method which allows improving a precision of focus control, and a signal processing apparatus.

### DISCLOSURE OF THE INVENTION

A tracking control apparatus according to the present invention comprises: focusing means for forming an optical beam spot on a recording surface of an optical disc by focusing light beam on the recording surface of the optical disc; moving means for moving the optical beam spot in a radial direction of the recording surface of the optical disc; photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal; a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means; a tracking error detection section for generating a tracking error signal indicating an amount of deviation of the optical beam spot from a track to be scanned on the recording surface of the optical disc by performing a predetermined calculation with respect to a plurality of signals output from the filter section; and a tracking control section for driving the moving means such that the optical beam spot follows the track on the recording surface of the optical disc in accordance with the tracking error signal, thereby achieving the above-described object"

A band control section for controlling the filter section such that the predetermined cutoff frequency becomes small as a recording speed for recording information on the optical disc increases may be further included.

The filter section may further include a plurality of equalizers, each of the equalizers may amplify a component of a predetermined frequency band included in a corresponding received light quantity signal among the plurality of the received light quantity signals output from the photodetection means, the optical disc apparatus may further include a switching section for selectively outputting one of a signal output from the low-pass filter and a signal output from the equalizer, the switching section may provide the signal output from the switching section to the tracking error detection section as the signal output from the filter section.

The switching section may provide the signal output from the low-pass filter to the tracking error detection section when the optical disc apparatus is in a recording operation state with respect to a recordable optical disc, and may provide the signal output from the equalizer to the tracking error detection section when the optical disc apparatus is in a reproduction operation state with respect to an optical disc of a reproduction-only type.

A focus control apparatus according to the present invention comprises: focusing means for forming an optical beam spot on a recording surface of an optical disc by focusing light beam on the recording surface of the optical disc; moving means for moving the optical beam spot in a direction substantially perpendicular to the recording surface of the optical disc; photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal; a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means; a focus error detection section for generating a focus error signal indicating an amount of deviation of the optical beam spot from the recording surface of the optical disc by performing a predetermined calculation with respect to a plurality of signals output from the filter section; and a focus control section for driving the moving means such that the optical beam spot follows the recording surface of the optical disc in accordance with the focus error signal, thereby achieving the above-described object.

A band control section for controlling the filter section such that the predetermined cutoff frequency becomes small as a recording speed for recording information on the optical disc increases may be further included.

A tracking control method according to the present invention is a tracking control method performing tracking control by using a tracking control apparatus, wherein the tracking control apparatus includes: focusing means for forming an optical beam spot on a recording surface of an optical disc by focusing light beam on the recording surface of the optical disc, moving means for moving the optical beam spot in a radial direction of the recording surface of the optical disc; and photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the tracking control method comprising the steps of : using a filter section including a plurality of low-pass filters to remove a component having a frequency equal to or higher than a predetermined cutoff frequency from each of a plurality of the received light quantity signals output from the photodetection means; generating a tracking error signal indicating an amount of deviation of the optical beam spot from a track to be scanned on the recording surface of the optical disc by performing a predetermined calculation with respect to a plurality of signals output from the filter section; and driving the moving means such that the optical beam spot follows the track on the recording surface of the optical disc in accordance with the tracking error signal, thereby achieving the above-describe object.

The step of controlling the filter section such that the predetermined cutoff frequency becomes small as a recording speed for recording information on the optical disc increases may be further included.

The steps of: using the filter section including a plurality of equalizers to amplify a component of a predetermined frequency band included in each of the plurality of the received light quantity signals output from the photodetection means; and selectively outputting one of a signal output from the low-pass filter and a signal output from the equalizer as the signal output from the filter section may be further included.

The signal output from the low-pass filter may be output as the signal output from the filter section when the optical disc apparatus is in a recording operation state with respect to a recordable optical disc, and the signal output from the equalizer may be output as the signal output from the filter section when the optical disc apparatus is in a reproduction operation state with respect to an optical disc of a reproduction-only type.

A focus control method according to the present invention is a focus control method performing focus control by using a focus control apparatus, wherein the focus control apparatus includes: focusing means for forming an optical beam spot on a recording surface of an optical disc by focusing light beam on the recording surface of the optical disc, moving means for moving the optical beam spot in a direction substantially perpendicular to the recording surface of the optical disc; and photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the focus control method comprising the steps of: using a filter section including a plurality of low-pass filters to remove a component having a frequency equal to or higher than a predetermined cutoff frequency from each of a plurality of the received light quantity signals output from the photodetection means; generating a focus error signal indicating an amount of deviation of the optical beam spot from the recording surface of the optical disc by performing a predetermined calculation with respect to a plurality of signals output from the filter section; and driving the moving means such that the optical beam spot follows the recording surface of the optical disc in accordance with the focus error signal, thereby achieving the above-describe object.

The step of controlling the filter section such that the predetermined cutoff frequency becomes small as a recording speed for recording information on the optical disc increases may be further included.

A signal processing apparatus according to the present invention is a signal processing apparatus used in a tracking control apparatus, wherein the tracking control apparatus includes: focusing means for forming an optical beam spot on a recording surface of an optical disc by focusing light beam on the recording surface of the optical disc, moving means for moving the optical beam spot in a radial direction of the recording surface of the optical disc; and photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the signal processing apparatus comprising: a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means; a tracking error detection section for generating a tracking error signal indicating an amount of deviation of the optical beam spot from a track to be scanned on the recording surface of the optical disc by performing a predetermined calculation with respect to a plurality of signals output from the filter section; and a tracking control section for driving the moving means such that the optical beam spot follows the track on the recording surface of the optical disc in accordance with the tracking error signal, thereby achieving the above-describe object.

A band control section for controlling the filter section such that the predetermined cutoff frequency becomes small as a recording speed for recording information on the optical disc increases may be further included.

The filter section may further include a plurality of equalizers, each of the equalizers may amplify a component of a predetermined frequency band included in a corresponding received light quantity signal among the plurality of the received light quantity signals output from the photodetection means, the optical disc apparatus may further include a switching section for selectively outputting one of a signal output from the low-pass filter and a signal output from the equalizer, and the switching section may provide the signal output from the switching section to the tracking error detection section as the signal output from the filter section.

The switching section may provide the signal output from the low-pass filter to the tracking error detection section when the optical disc apparatus is in a recording operation state with respect to a recordable optical disc, and may provide the signal output from the equalizer to the tracking error detection section when the optical disc apparatus is in a reproduction operation state with respect to an optical disc of a reproduction-only type.

A signal processing apparatus according to the present invention is a signal processing apparatus used in a focus control apparatus, wherein the focus control apparatus includes: focusing means for forming an optical beam spot on a recording surface of an optical disc by focusing light beam on the recording surface of the optical disc, moving means for moving the optical beam spot in a direction substantially perpendicular to the recording surface of the optical disc; and photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the signal processing apparatus comprising: a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means; a focus error detection section for generating a focus error signal indicating an amount of deviation of the optical beam spot from the recording surface of the optical disc by performing a predetermined calculation with respect to a plurality of signals output from the filter section; and a focus control section for driving the moving means such that the optical beam spot follows the recording surface of the optical disc in accordance with the focus error signal, thereby achieving the above-describe object.

A band control section for controlling the filter section such that the predetermined cutoff frequency becomes small as a recording speed for recording Information on the optical disc increases may be further included.

The optical disc apparatus according to the present invention includes a filter section for remaining components necessary for tracking control or focus control and removing unnecessary components immediately after a received detection section. Thus, a disturbance due to modulation components of laser power (recording power) can be removed from a tracking error signal or a focus error signal. As a result, a precision of the tracking control or the focus control can be improved.

The optical disc apparatus according to the present invention is useful as a DVD multi-recorder, DVD multidrive or the like. Further, the present invention can be also applied to any type of optical disc apparatuses recording/reproducing multiple media, not limited to DVDs.

### BRIEF DESCRIPTION OF THE DRAWINGS

Figure **1** is a diagram showing a structure of the optical disc apparatus according Embodiment 1 of the present invention.
Figure **2** is a diagram showing a structure of the optical disc apparatus according Embodiment 1 of the present invention.
Figure **3** is a diagram showing a structure of a circuit for detecting tracking errors by using a phase difference method.
Figure **4** is a diagram showing a structure of a circuit for detecting tracking errors by using a push-pull method.

The description of the reference numerals are as follows:
**1** Optical disc
**2, 202** Laser diode
**3, 203** Collimate lens
**4, 204** Beam splitter
**5, 205** Objective lens
**6, 206** Received light quantity detection section
**101** Lens driving section
**102** Control signal generation section
**103** Switching control section
**104** Tracking error detection section
**105** Switching section
**106** Filter section
**107** Band control section
**108** Disc determination section
**109** Management section
**207** Focus detection lens
**208** Lens driving section
**209** Control signal generation section
**210** Switching control section
**211** Focus error detection section
**212 Switching** section
**213** Filter section
**214** Management section
**301, 401** Received light quantity detection section
**302, 303, 402, 403** Adder
**304** Phase comparator
**404** Subtracter

### BEST MODE FOR CARRYING OUT THE INVENTION

Hereinafter, embodiments of the present invention will be described with reference to the drawings.

### (Embodiment 1)

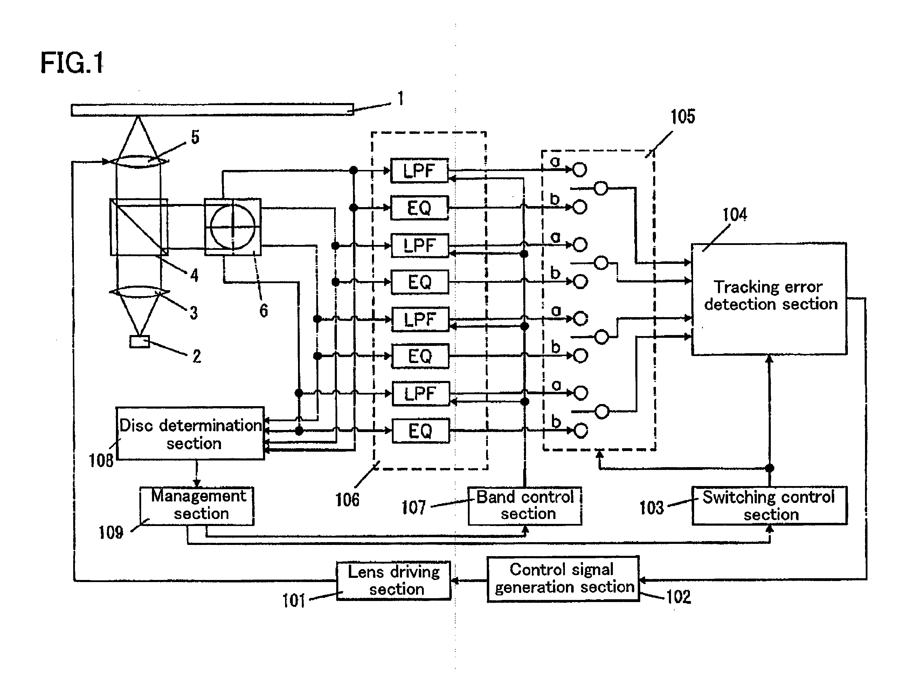

Figure **1** shows a structure of an optical disc apparatus according to Embodiment 1 of the present invention.

A laser diode **2** outputs laser light.

A collimate lens **3** converts the light output from the laser diode **2** into parallel light.

A beam splitter **4** transmits the parallel light from the collimate lens 3 through an objective lens **5.** The beam splitter **4** also separates parallel light from the objective lens 5 (light reflected off an optical disc **1)** to a direction of a received light quantity detection section **6.**

The objective lens 5 focuses the parallel light passed through the collimate lens **3** and the beam splitter **4** to a recording surface of the optical disc 1 and forms an optical beam spot on the recording surface of the optical disc **1.** Further, the objective lens 5 converts the light reflected off the optical disc **1** into parallel light and passes the parallel light through the beam splitter **4.**

A lens driving section **101** moves the optical beam spot formed by the objective lens **5** in a radial direction of the recording surface of the optical disc **1.**

The received light quantity detection section 6 has a light receiving surface for detecting the light reflected off the optical disc **1.** The light receiving surface is separated into four areas by a boundary along a tangent to recording tracks of the optical disc 1 and a boundary along the perpendicular direction. Each of the four areas is formed to generate and output a received light quantity signal in accordance with a received light quantity.

A filter section 106 has four sets of low-pass filter s (LPF) and equalizers (EQ). The LPFs remove components having frequencies equal to or higher than a predetermined cutoff frequency from a corresponding received light quantity signal from the four received light quantity signals output from four areas of the received light quantity detection section **6** and pass through other components. The EQs amplify and pass components of a predetermined frequency band included in a corresponding received light quantity signal from the four received light quantity signals output from four areas of the received light quantity detection section **6,** and removes other components. Further, eachof the LPFs is formed such that it is possible to switch the cutoff frequency in accordance with a signal output from a band control section 107.

A disc determination section **108** determines the type of the optical disc 1 mounted on the optical disc apparatus based on the four received light quantity signals output from the four areas of the received light quantity detection section **6.**

Different types of the optical discs **1** have different physical standards of the optical discs **1.** Difference of the physical standards may be, for example, reflectance of the optical disc **1,** depths of the guiding grooves of the recording tracks and the like. Such differences may result in differences in the amplitudes of the four received light quantity signals output from the received light quantity detection section **6** and the mutual relationship between phases may vary depending upon the type of the optical disc **1.** The disc determination section **108** determines the type of the disc determination section **108** by detecting such differences.

The disc determination section **108** may determine the type of the optical disc **1** in accordance with a signal other than the four received light quantity signals output from the received light quantity detection section **6.** For example, when the optical disc **1** is accommodated in a cartridge having a shape specific to DVD-RAMs, the disc determination section **108** may be formed to determine that the optical disc **1** is a DVD-RAM in accordance with an output signal from a sensor for detecting the shape of the cartridge.

A management section **109** stores information indicating the type of the optical disc **1** determined by the disc determination section **108.** Further, the management section **109** stores information indicating whether the optical disc apparatus is in a recording operation state or a reproduction operation state, and stores information indicating a recording speed and information indicating a reproduction speed.

A switching control section 103 outputs signals to a switching section **105** and a tracking error detection section **104** in accordance with the information indicating the type of the optical disc **1** and the information indicating whether the optical disc apparatus is in a recording operation state or a reproduction operation state stored in the management section **109.**

The band control section **107** generates a signal for switching the cutoff frequencies of the LPFs of the filter section **106** in accordance with the information indicating the recording speed stored in the management section **109** and outputs the signal to the filter section **106.** Specifically, the band control section **107** controls the filter section **106** such that the cutoff frequencies of the LPFs become smaller as the recording speed increases, and the cutoff frequencies of the LPFs become larger as the recording speed decreases.

Table 1 shows an exemplary relationship between the recording speed (rate for recording), the recording power (power of laser light for recording) and the cutoff frequency (cutoff frequencies of the LPFs) when the optical disc 1 is a DVD-RAM.

**Table 1 For a DVD-RAM**

| Rate for recording | Double speed | Triple speed | Fivefold speed |
|---|---|---|---|
| Recording power | 10 mV | 12 mV | 14 mV |
| Cutoff frequency | 1 MHz | 800 KHz | 700 KHz |

Table 2 shows an exemplary relationship between the recording speed (rate for recording), the recording power (power of laser light for recording) and the cutoff frequency (cutoff frequencies of the LPFs) when the optical disc **1** is a DVD-R.

**Table 2 For a DVD-R**

| Rate for recording | Normal speed | Quadruple speed | Eightfold speed |
|---|---|---|---|
| Recording power | 10 mV | 16 mV | 26 mV |
| Cutoff frequency | 1 MHz | 600 KHz | 380 KHz |

As shown in the tables, as the recording speed (for example, rate for recording) increases, the recording power has to be increased. Accordingly, a disturbance due to a modulation component of the laser power (recording power) becomes larger.

As shown in Tables 1 and 2, by decreasing the cutoff frequency of the LPF as the recording speed increases, it becomes possible to suppress the influence of the disturbance due to modulation component of the laser power (recording power) which becomes larger as the recording speed increases. This is because cutoff effect of the LPF can be improved by decreasing the cutoff frequency of the LPF.

Accordingly, it is significantly practical to decrease the cutoff frequency of the LPF as the recording speed increases (i.e., as the recording power increases) as in the present invention.

Particularly, multi-layer discs such as dual-layer discs require a large recording power by their nature. Thus, the influence of the disturbance due to the modulation component of the laser power (recording power) is large. Therefore, it is very useful to control the cutoff frequency of the LPF as in the present invention.

The switching section **105** has four selectors with two inputs and one output. The one selected from two inputs a and b of each of the selectors is connected to the output of the selector. Outputs of the LPFs are respectively connected to the inputs a of the selectors. Outputs of the EQs are respectively connected to the inputs b of the selectors. The LPF and the EQ connected to the inputs a and b of one selector is a set of LPF and EQ which receive the same received light quantity signal in the filter section **106.**

The switching section **105** switches the input of the selector to a or b at the same time in accordance with the signal output from the switching control section **103.**

The tracking error detection section **104** generates and outputs a tracking error signal indicating an amount of deviation of the optical beam spot from a track to be scanned on the recording surface of the optical disc **1,** based on four signals output from the switching section **105.**

The tracking error detection section **104** includes an operational circuit which handles the phase difference method (not shown) and an operational circuit which handles a push-pull method (not shown). One of the two circuits is selectively used in accordance with the signal output from the switching control section **103.**

The operational circuit which handles the phase difference method includes the adder **302,** the adder **303** and the phase comparator **304** shown in Figure **3.** In the operational circuit, four signals output from the switching section 105 are input to the adders 302 and 303 instead of four received light quantity signals output from the received light quantity detection section **301** shown in Figure **3.**

The operational circuit which handles the push-pull method includes the **adder 402,** the adder **403** and the subtracter **404** shown in Figure **4.** In the operational circuit, four signals output from the switching section 105 are input to the adders 402 and 403 instead of four received light quantity signals output from the received light quantity detection section **401** shown in Figure **4.**

A control signal generation section **102** outputs a tracking control signal for making the optical beam spot formed by the objective lens 5 follow the track on the recording surface of the optical disc 1 in accordance with the tracking error signal output from the tracking error detection section **104.**

The lens driving section **101** moves the objective lens **5** in a radial direction of the optical disc **1** so that the optical beam spot follows the track on the recording surface of the optical disc 1 in accordance with the tracking control signal output from the control signal generation section **102.**

As described above, the optical disc apparatus shown in Figure **1** function as a tracking control apparatus which performs tracking control.

The objective lens **5** functions as focusing means for forming the optical beam spot on the recording surface of the optical disc **1** by focusing light beam on the recording surface of the optical disc **1.** However, the focusing means is not limited to the objective lens **5.** Any one or more elements can be used as focusing means as long as they have a function similar to the function of the above-mentioned focusing means.

The lens driving section **101** functions as movingmeans for moving the optical beam spot formed by the objective lens **5** in a radial direction of the recording surface of the optical disc **1.** However, the moving means is not limited to the lens driving section **101.** Any one or more elements can be used as moving means as long as they have a function similar to the function of the above-mentioned moving means.

The received light quantity detection section 6 functions as photodetection means having the light receiving surface for detecting the light reflected off the optical disc **1.** The light receiving surface is separated into a plurality of areas" Each of the plurality of areas is formed to generate and output a received light quantity signal in accordance with received light quantity. However, the photodetection means is not limited to the received light quantity detection section **6.** Any one or more element can be used as photodetection means as long as they have a function similar as the function of the above-mentionedphotodetection means.

It is not an essential feature for the present invention that the filter section **106** includes a plurality of equalizers (EQs). As long as the filter section **106** includes a plurality of low-pass filters (LPFs) and each of the LPFs is formed to remove a component having a frequency equal to or higher than the predetermined frequency from a corresponding received light quantity signal among the plurality of received light quantity signals output from the photodetection means, the optical disc apparatus including the filter section **106** is within the scope of the present invention. IF the filter section **106** includes a plurality of LPFs and does not include a plurality of EQs, the switching section **105** is not necessary. In such a case, outputs from the plurality of LPFs are provided to the tracking error detection section **104** all the time. Alternatively, outputs from the plurality of EQs may be provided to the tracking error detection section **104** all the time.

The tracking error detection section **104** performs predetermined calculations with respect to the plurality of signals output from the filter section **106** to generate the tracking error signal. How to generate the tracking error signal is not important in the present invention. The tracking error detection section **104** may generate the tracking error signal by using the above-mentioned operational circuits, or may generate the tracking error signal by using any known method.

The control signal generation section **102** functions as a tracking control section for driving the lens driving section **101** such that the optical beam spot follows the track on the recording surface of the optical disc 1 in accordance with the tracking error signal.

The filter section **106,** tracking error detection section 104, and the control signal generation section 102 may be implemented by software by using computer programs or the like, or may be implemented by hardware by using circuits or the like. Alternatively, they can be implemented by the combination of software and hardware. The same is also true of the disc determination section **108,** management section **109,** band control section **107,** switching section **105,** and switching control section **103.**

The lens driving section **101** may be, for example, a mechanical actuator.

An integration circuit may be formed by integrating at least the filter section **106,** tracking error detection section **104,** and control signal generation section 102 on one semiconductor chip. Such an integration circuit "functions as a signal processing apparatus for processing the tracking error signal.

Next, relationships between two methods used for detecting tracking errors in the tracking error detection section **104** (i.e. , the phase difference method and push-pull method) and frequency bands of the received light quantity signals will be described.

The phase difference method is used when the optical disc 1 is recorded by pits or recording marks. In such a method, tracking errors are detected by detecting that phase of a component, for which a pit or a recording mark is detected, of the received light quantity signals output from each of the four areas of the received light quantity detection section 6 is different for each of the four areas depending upon a tracking error. Thus, the received light quantity signals when being input to the tracking error detection section 104 have to be signals having high frequency bands in which a pit or a recording mark is detected (more specifically, signals of few MHz to several tens of MHz in the case of DVDs).

The push-pull method is used when the optical disc **1** has guiding grooves. In such a method, tracking errors are detected by detecting that light quantity of primary diffraction, which is diffracted by a guiding groove, of the received light quantity signals output from each of the four areas of the received light quantity detection section **6** is different for each of the four areas depending upon a tracking error. A frequency band of the component for which the guiding groove is detected is same as the frequency band for the optical beam spot to traverse the guiding groove due to decentering of the optical disc and a shift in chucking (more specifically, the band of several tens of kHz or lower in the case of DVDs). Thus, the frequency band of the received light quantity signals when being input to the tracking error detection section 104 may be a band of approximately 100 kHz or below.

For the required frequency band of the received light quantity signals when being input to the tracking error detection section **104** as described above, the frequency band of the laser power modulation components included in the received light quantity signals are about few tens of MHz to several hundreds of MHz in the case of DVDs.

The methods for detecting tracking errors are used as follows, specifically. The phase difference method is used for DVD-ROMs of reproduction-only type. The push-pull method is used for DVD-RAMs for both recording and reproduction. For DVD-Rs, the push-pull method is used for recording, and the phase difference method is used for reproduction.

Regarding components included in the received light quantity signals when being input to the tracking error detection section **104,** the optical disc apparatus operates as follows so as to remain components necessary for tracking error detection and remove unnecessary components for tracking error detection from the received light quantity signals when being input to the tracking error detection section **104.** At this stage, "unnecessary components" include the laser power component for recording, components of frequency bands which are not related to tracking error detection, and the like.

When the optical disc apparatus is in the recording operation state, or when the optical disc **1** mounted on the optical disc apparatus is a DVD-RAM irrespective of whether the optical disc apparatus is in the recording operation state or the reproduction operation state, the switching control section **103** outputs a signal to the tracking error detection section **104** to employ the push-pull method as the tracking error detection method. The switching control section **103** also outputs a signal to the switching section **105** so that the inputs to the selectors are input from the inputs a. In this way, provided that the cutoff frequency of the LPFs of the filter section **106** are about several hundreds of kHz, only the signal components required for tracking error detection by the push-pull method are remained and tracking error detection can be normally performed.

When the optical disc apparatus is in the reproduction operation state, and the optical disc 1 mounted on the optical disc apparatus is a DVD-ROM or a DVD-R, the switching control section **103** outputs a signal to the tracking error detection section **104** to employ the phase difference method as the tracking error detection method. The switching control section **103** also outputs a signal to the switching section **105** so that inputs to the selectors are input from the inputs b. In this way, provided that amplification frequency bands of the EQs of the filter section **106** are about few MHz to several tens of MHz, only signal components of a predetermined bands of high frequencies required for the tracking error detection by the phase difference method can be amplified and phase comparison can be precisely performed, and thus, tracking error detection can be normally performed.

The recording speed (for example, rate for recording) is different depending upon intended purpose of the optical disc apparatus and/or the type of the optical disc mounted on the optical disc apparatus. This results in different recording power, tracking control gains, frequency bands required for tracking error detection, and frequency band of the laser power modulation components. Recently, apparatuses which are common for DVD recorders and DVD drives for personal computer are often produced. However, the recording speed is modified as follows so as to conform to the intended purpose of the optical disc drive.

For recording by the DVD recorders, low-speed recording of double speed or lower is used in view of necessary recording speed for recording and making a disc motor quiet. For file transfer by the DVD drives for personal computers or rapid copying by the DVD recorders, rapid recording of double speed to triple speed for DVD-RAMs and quadruple speed to eightfold speed for DVD-Rs is used.

Usually, as the recording speed increases, the recording power has to be increased. Accordingly, the disturbance due to the modulation component of the laser power (recording power) becomes large. Thus, it is advantageous for tracking detection to decrease the cutoff frequency and improve the disturbance cutoff effect.

As the recording speed increases, the tracking control gain has to be increased for increasing following speed of tracking control. Thus, tracking error detection at a high frequency is necessary. Therefore, if the cutoff frequency is lowered too much, the precision of tracking control may be deteriorated.

Further, as the recording speed increases, the frequency band of the disturbance due to the modulation component of the laser power (recording power) increases.

As described above, components required for the tracking error detection and the frequency band and the size of the unnecessary components are slightly different depending upon the recording speed (for example, the rate for the recording). Therefore, the cutoff frequencies of the LPFs are previously designed for each recording speed to have a balance in two points: the size and the frequency band of the disturbance due to the modulation component of the laser power (recording power), and the cutoff effects of the LPFs ; and securing the frequency band required for tracking error detection.

The band control section **107** outputs a signal for switching the cut-off frequency of the LPFs to the filter section **106** so that the cutoff frequency of the LPFs of the filter section **106** become the previously designed values in accordance with the recording speed set to the optical disc apparatus for recording. The LPFs of the filter section 106 perform an operation to switch the cutoff frequencies in accordance with the signal from the band control section **107.** In this way, signal components required for tracking error detection can be remained at a higher precision.

As described above, according to the present invention, the components required for tracking error detection which are included in the received light quantity signals when being input to the tracking error detection section **104** are remained with a high precision, and components which are unnecessary for tracking error detection, such as laser power component for recording, noise, and the like are removed from the received light quantity signals. In this way, the tracking error detection can be normally performed without saturation of signals in the tracking error detection section **104.** As a result, tracking control of a high precision can be performed even for a high-speed recording.

In Embodiment 1, the tracking error detection methods and the frequency bands have been described with reference to examples where the optical disc **1** is one of DVD-RAMs, DVD-Rs, and DVD-ROMs . However, the type of the optical disc **1** is not limited to the above-mentioned DVD discs. Even when the optical disc **1** is an optical disc other than the above-mentioned DVD discs, the present invention can be applied to any type of optical discs by appropriately adjusting the tracking error detection methods and the frequency bands.

Similar to the recording speed (for example, rate for recording), a reproduction speed (rate for reproducing) is different depending upon the intended purpose of the optical disc apparatus and the type of the optical disc mounted to the optical disc apparatus. Thus, not only the cutoff frequencies of the LPFs, but also the amplification frequency bands of the EQs may be modified in accordance with the reproduction speed (rate for reproducing). In this way, tracking error detection for reproducing can be performed with a high precision, and tr acking control of a high precision can be performed.

### (Embodiment 2)

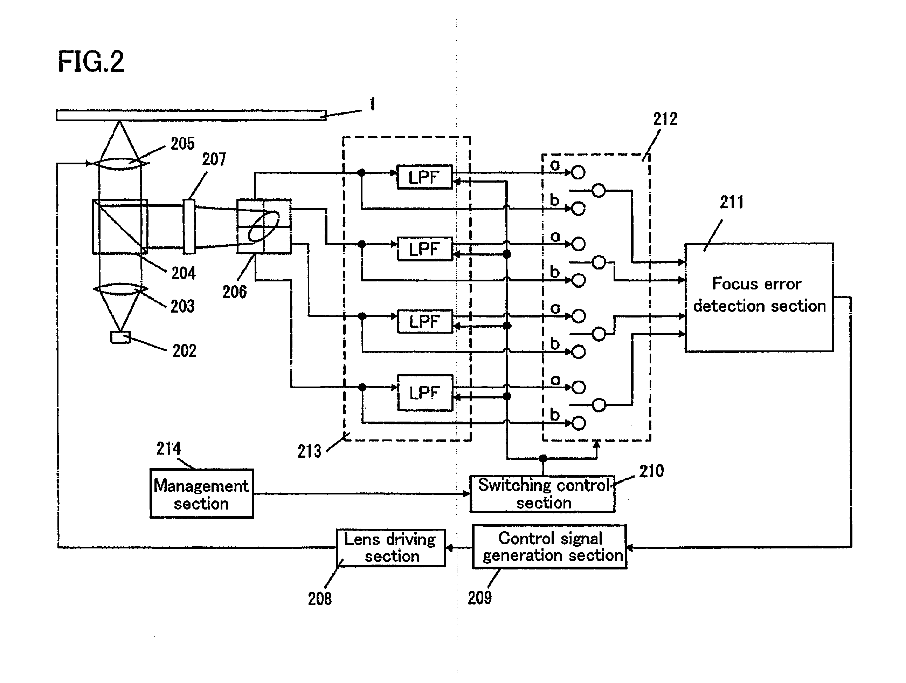

Figure **2** shows a structure of an optical disc apparatus according to Embodiment 2 of the present invention.

A laser diode **202** outputs laser light.

A collimate lens **203** converts the light output from the laser diode **202** into parallel light.

A beam splitter **204** transmits the parallel light from the collimate lens **203** through an objective lens **205.** The beam splitter **204** also separates parallel light from the objective lens **205** (light reflected off an optical disc **1)** to a direction of a focus detection lens **207.**

The focus detection lens **207** has a lens structure for detecting focus errors by an astigmatism method from the parallel light passed through the beam splitter 204 and focus the light to a received light quantity detection section **206.**

The objective lens 205 focuses the parallel light passed through the collimate lens **203** and the beam splitter **204** to a recording surface of the optical disc **1** and forms an optical beam spot on the recording surface of the optical disc 1. Further, the objective lens **205** converts the light reflected off the optical disc **1** into parallel light and passes the parallel light through the beam splitter **204.**

A lens driving section **208** moves the optical beam spot formed by the objective lens **205** in a direction substantially perpendicular to the recording surface of the optical disc **1.**

The received light quantity detection section 206 has a light receiving surface for detecting elliptical focus focused by the focus detection lens **207.** The light receiving surface is separated into four areas by two boundaries. Each of the four areas is formed to generate and output a received light quantity signal in accordance with a received light quantity. The received light quantity detection section 206 is formed such that one of two diagonal directions of the four areas matches the major axis elliptical focus and the other of the diagonal directions of the four areas matches the minor axis of the elliptical focus.

A filter section **213** has four sets of low-pass filters (LPF) and conductors. The LPFs remove components having frequencies equal to or higher than a predetermined cutoff frequency from a corresponding received light quantity signal from the four received light quantity signals output from four areas of the received light quantity detection section 206 and pass through other components. The conductors pass a corresponding received light quantity signal from the four received light quantity signals output from four areas of the received light quantity detection section **206** as it is. Further, each of the LPFs is formed such that it is possible to switch the cutoff frequency in accordance with a signal output from a switching control section **210.**

The switching control section **210** outputs signals to a switching section **212** and a filter section **213** in accordance with information indicating whether the optical disc apparatus is in a recording operation state or a reproduction operation and information indicating a recording speed (for example, rate for recording).

A management section **214** the information indicating whether the optical disc apparatus is in a recording operation state or a reproduction operation state and the information indicating a recording speed (for example, rate for recording), and outputs the information to the switching control section **210.**

The switching section **212** has four selectors with two inputs and one output. The one selected from two inputs a and b of each of the selectors is connected to the output of the selector. Outputs of the LPFs are respectively connected to the inputs a of the selectors. Outputs of the EQs are respectively connected to the inputs b of the selectors . The LPF and the conductor connected to the inputs a and b of one selector is a set of LPF and conductor which receive the same received light quantity signal in the filter section 106.

The switching section **212** switches the input of the selector to a or b at the same time in accordance with the signal output from the switching control section **210.**

The focus error detection section 211 generates and outputs a focus error signal indicating an amount of deviation of the optical beam spot from the recording surface of the optical disc 1, based on four signals output from the switching section **212.**

A control signal generation section **209** outputs a focus control signal for making the optical beam spot formed by the objective lens 5 follow the track on the recording surface of the optical disc 1 in accordance with the focus error signal output from the focus error detection section **211.**

The lens driving section **208** moves the objective lens **205** in a direction substantially perpendicular to the recording surface of the optical disc **1** so that the optical beam spot follows the track on the recording surface of the optical disc **1** in accordance with the focus control signal output from the control signal generation section **209.**

As described above, the optical disc apparatus shown in Figure **2** function as a focus control apparatus which performs focus control.

The objective lens **205** functions as focusing means for forming the optical beam spot on the recording surface of the optical disc **1** by focusing light beam on the recording surface of the optical disc **1.** However, the focusing means is not limited to the objective lens 205. Any one or more elements can be used as focusing means as long as they have a function similar to the function of the above-mentioned focusing means.

The lens driving section **208** functions as moving means for moving the optical beam spot formed by the objective lens **205** in a direction substantially perpendicular to the recording surface of the optical disc 1. However, the moving means is not limited to the lens driving section **208.** Any one or more elements can be used as moving means as long as they have a function similar to the function of the above-mentioned moving means.

The received light quantity detection section 206 functions as photodetection means having the light receiving surface fox detecting the light reflected off the optical disc **1.** The light receiving surface is separated into a plurality of areas. Each of the plurality of areas is formed to generate and output a received light quantity signal in accordance with received light quantity. However, the photodetection means is not limited to the received light quantity detection section **206.** Any one or more element can be used as photodetection means as long as they have a function similar as the function of the above-mentioned photodetection means.

It is not an essential feature for the present invention that the filter section **213** includes a plurality of conductors. As long as the filter section **213** includes a plurality of low-pass filters (LPFs) and each of the LPFs is formed to remove a component having a frequency equal to or higher than the predetermined frequency from a corresponding received light quantity signal among the plurality of received light quantity signals output from the photodetection means, the optical disc apparatus including the filter section **213** is within the scope of the present invention. IF the filter section **213** includes a plurality of LPFs and does not include a plurality of conductors, the switching section **211** is not necessary. In such a case, outputs from the plurality of LPFs are provided to the focus error detection section **211** all the time. Alternatively, outputs from the plurality of conductors may be provided to the focus error detection section **211** all the time.

The focus error detection section **211** performs predetermined calculations with respect to the plurality of signals output from the filter section **213** to generate the focus error signal. How to generate the focus error signal is not important in the present invention. The focus error detection section **211** may generate the focus error signal by using any known method.

The control signal generation section **209** functions as a tracking control section for driving the lens driving section **208** such that the optical beam spot follows the recording surface of the optical disc **1** in accordance with the focus error signal.

The filter section **213**, focus error detection section **211,** and the control signal generation section **209** may be implemented by software by using computer programs or the like, or may be implemented by hardware by using circuits or the like. Alternatively, they can be implemented by the combination of software and hardware. The same is also true of the management section **214,** and switching control section **210.**

The lens driving section **208** may be, for example, a mechanical actuator.

An integration circuit may be formed by integrating at least the filter section **213,** focus error detection section **211,** and control signal generation section **209** on one semiconductor chip. Such an integration circuit functions as a signal processing apparatus for processing the focus error signal.

In the optical disc apparatus shown in Figure **2,** the received light quantity detection section **206** is shared by an RF signal system and a focus control system in order to reduce the size and the cost of an optical head. RF signal is generated by a reproduction section which is not shown and recorded information is reproduced based on the four signals output from the received light quantity detection section 206.

The focus error is generated due to a non-planar surface of the optical disc, a shift in chucking, and the like. The frequency band is about several tens of kHz or lower in the case of DVDs. Thus, the frequency band of the received light quantity signal when being input to the focus error detection section **211** may be the band of several hundreds of kHz or lower. On the other hand, the response frequency of the received light quantity detection section **206** is high for generating the RF signal and includes laser power modulation component of few tens of MHz to several hundreds of MHz for recording.

As described with reference to Embodiment 1, the recording speed (for example, rate for recording) is different depending upon the intended purpose of the optical disc apparatus and the type of optical disc **1** mounted on the optical disc apparatus. This result in different focus control gains, frequency bands of the components required for the focus error signal, and the frequency band and the size of unnecessary components (particularly, modulation components of the laser power (recording power)). This is as described with reference to Embodiment 1 and the same is also true of the focus control system as the tracking control system.

Therefore, in the optical disc apparatus shown in Figure **2,** the cutoff frequencies of the LPFs are made variable and the following operation is performed.

When the optical disc apparatus is in the recording operation state, the switching control section **210** outputs a signal to switching section **212** such that the selectors receives input from the inputs a. Further, the switching control section **210** outputs a signal for switching the cutoff frequencies of the LPFs to the filter section **213** such that, when the rate for recording is low, the cutoff frequencies of the LPFs are set to have high values, and, when the rate for recording is high, the cutoff frequencies of the LPFs are set to have low values.

Accordingly, when recording is performed, the laser power modulation components are always removed from the received light quantity signals when being input to the focus error detection section **211.** Therefore, the focus error detection can be normally performed without the influence of the laser power modulation component. As a result, focus control with a high precision can be performed even during a high-speed rotation.

In Embodiment 2, the focus error detection methods and the frequency bands have been described with reference to examples where the optical disc **1** is a DVD. However, the type of the optical disc **1** is not limited to the DVDs. Even when the optical disc **1** is an optical disc other than the DVDs, the present invention can be applied to any type of optical discs by appropriately adjusting the frequency bands.

Further, in Embodiment 2, the structure and operations of the optical disc apparatus have been described with reference to examples where the focus error method is an astigmatism method. However, the type of the focus error detection method is not limited to the astigmatism method. The present invention is not specific to a certain focus error detection method, but can be applied to any focus error detection method.

The switching section **212** may be omitted, and instead, the cutoff frequencies of the LPFs may be switched in accordance with the rate not only for recording but also for reproduction. In this way, RF signal components included in the received light quantity signals (in the case of DVDs, the signal component from few MHz to several tens of MHz) can be removed with a high precision in accordance with the rate. Therefore, the focus error detection can be performed at a high precision even for reproduction, and focus control with a high precision can be performed.

The present invention has been described above with reference to the preferable embodiment of the present invention. However, the present invention should not be construed as being limited to such an embodiment. It should be recognized that the scope of the present invention is only construed by the claims. It should be recognized that those skilled in the art can implement the equivalent scope from the descriptions of the specific preferable embodiment, based on the descriptions of the present invention and common technical knowledge. It is also recognized that the patents, patent applications and documents referred herein are hereby incorporated by reference as if their entirety are described.

### INDUSTRIAL APPLICABILITY

The optical disc apparatus according to the present invention includes a filter section for remaining components necessary for tracking control or focus control and removing unnecessary components immediately after a received detection section. Thus, a disturbance due to modulation components of laser power (recording power) can be removed from a tracking error signal or a focus error signal. As a result, a precision of the tracking control or the focus control can be improved.

The optical disc apparatus according to the present invention is useful as a DVD multi-recorder, DVD multidrive or the like. Further, the present invention can be also applied to any type of optical disc apparatuses recording/reproducing multiple media, not limited to DVDs.

## Claims

1. A tracking control apparatus comprising:
focusing means for forming an optical beam spot on a recording surface of an optical disc by focusing light beam on the recording surface of the optical disc;
moving means for moving the optical beam spot in a radial direction of the recording surface of the optical disc;
photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal;
a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means;
a tracking error detection section for generating a tracking error signal indicating an amount of deviation of the optical beam spot from a track to be scanned on the recording surface of the optical disc by performing a predetermined calculation with respect to a plurality of signals output from the filter section; and
a tracking control section for driving the moving means such that the optical beam spot follows the track on the recording surface of the optical disc in accordance with the tracking error signal.

2. A tracking control apparatus according to claim 1, further comprising a band control section for controlling the filter section such that the predetermined cutoff frequency becomes small as a recording speed for recording information on the optical disc increases.

3. A tracking control apparatus according to claim 1, wherein:
the filter section further includes a plurality of equalizers, each of the equalizers amplifying a component of a predetermined frequency band included in a corresponding received light quantity signal among the plurality of the received light quantity signals output from the photodetection means;
the optical disc apparatus further includes a switching section for selectively outputting one of a signal output from the low-pass filter and a signal output from the equalizer;
the switching section provides the signal output from the switching section to the tracking error detection section as the signal output from the filter section.

4. A tracking control apparatus according to claim 3, wherein the switching section provides the signal output from the low-pass filter to the tracking error detection section when the optical disc apparatus is in a recording operation state with respect to a recordable optical disc, and provides the signal output from the equalizer to the tracking error detection section when the optical disc apparatus is in a reproduction operation state with respect to an optical disc of a reproduction-only type.

5. A focus control apparatus comprising:
focusing means for forming an optical beam spot on a recording surface of an optical disc by focusing light beam on the recording surface of the optical disc;
moving means for moving the optical beam spot in a direction substantially perpendicular to the recording surface of the optical disc;
photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal;
a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means;
a focus error detection section for generating a focus error signal indicating an amount of deviation of the optical beam spot from the recording surface of the optical disc by performing a predetermined calculation with respect to a plurality of signals output from the filter section; and
a focus control section for driving the moving means such that the optical beam spot follows the recording surface of the optical disc in accordance with the focus error signal.

6. A focus control apparatus according to claim 5, further comprising a band control section for controlling the filter section such that the predetermined cutoff frequency becomes small as a recording speed for recording information on the optical disc increases.

7. A tracking control method performing tracking control by using a tracking control apparatus, wherein
the tracking control apparatus includes:
focusing means for forming an optical beam spot on a recording surface of an optical disc by focusing light beam on the recording surface of the optical disc,
moving means for moving the optical beam spot in a radial direction of the recording surface of the optical disc; and
photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the tracking control method comprising the steps of:
using a filter section including a plurality of low-pass filters to remove a component having a frequency equal to or higher than a predetermined cutoff frequency from each of a plurality of the received light quantity signals output from the photodetection means;
generating a tracking error signal indicating an amount of deviation of the optical beam spot from a track to be scanned on the recording surface of the optical disc by performing a predetermined calculation with respect to a plurality of signals output from the filter section; and
driving the moving means such that the optical beam spot follows the track on the recording surface of the optical disc in accordance with the tracking error signal.

8. A tracking control method according to claim 7, further comprising the step of controlling the filter section such that the predetermined cutoff frequency becomes small as a recording speed for recording information on the optical disc increases.

9. A tracking control method according to claim 7, further comprising the steps of:
using the filter section including a plurality of equalizers to amplify a component of a predetermined frequency band included in each of the plurality of the received light quantity signals output from the photodetection means; and
selectively outputting one of a signal output from the low-pass filter and a signal output from the equalizer as the signal output from the filter section.

10. A tracking control method according to claim 9, wherein the signal output from the low-pass filter is output as the signal output from the filter section when the optical disc apparatus is in a recording operation state with respect to a recordable optical disc, and the signal output from the equalizer is output as the signal output from the filter section when the optical disc apparatus is in a reproduction operation state with respect to an optical disc of a reproduction-only type.

11. A focus control method performing focus control by using a focus control apparatus, wherein
the focus control apparatus includes:
focusing means for forming an optical beam spot on a recording surface of an optical disc by focusing light beam on the recording surface of the optical disc,
moving means for moving the optical beam spot in a direction substantially perpendicular to the recording surface of the optical disc; and
photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the focus control method comprising the steps of:
using a filter section including a plurality of low-pass filters to remove a component having a frequency equal to or higher than a predetermined cutoff frequency from each of a plurality of the received light quantity signals output from the photodetection means;
generating a focus error signal indicating an amount of deviation of the optical beam spot from the recording surface of the optical disc by performing a predetermined calculation with respect to a plurality of signals output from the filter section; and
driving the moving means such that the optical beam spot follows the recording surface of the optical disc in accordance with the focus error signal.

12. A focus control method according to claim 11, further comprising the step of controlling the filter section such that the predetermined cutoff frequency becomes small as a recording speed for recording information on the optical disc increases.

13. A signal processing apparatus used in a tracking control apparatus, wherein
the tracking control apparatus includes:
focusing means for forming an optical beam spot on a recording surface of an optical disc by focusing light beam on the recording surface of the optical disc;
moving means for moving the optical beam spot in a radial direction of the recording surface of the optical disc; and
photodetection means having a light receiving surface for detecting light reflected off the optical disc, in which the light receiving surface is separated into a plurality of areas, and each of the plurality of areas is formed to generate a received light quantity signal in accordance with a received light quantity and to output the received light quantity signal, the signal processing apparatus comprising:
a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means;
a tracking error detection section for generating a tracking error signal indicating an amount of deviation of the optical beam spot from a track to be scanned on the recording surface of the optical disc by performing a predetermined calculation with respect to a plurality of signals output from the filter section; and
a tracking control section for driving the moving means such that the optical beam spot follows the track on the recording surface of the optical disc in accordance with the tracking error signal.

14. A signal processing apparatus according to claim 13, further comprising a band control section for controlling the filter section such that the predetermined cutoff frequency becomes small as a recording speed for recording information on the optical disc increases.

15. A signal processing apparatus according to claim 13, wherein:
the filter section further includes a plurality of equalizers, each of the equalizers amplifying a component of a predetermined frequency band included in a corresponding received light quantity signal among the plurality of the received light quantity signals output from the photodetection means;
the optical disc apparatus further includes a switching section for selectively outputting one of a signal output from the low-pass filter and a signal output from the equalizer; and
the switching section provides the signal output from the switching section to the tracking error detection section as the signal output from the filter section.

16. A signal processing apparatus according to claim 15, wherein the switching section provides the signal output from the low-pass filter to the tracking error detection section when the optical disc apparatus is in a recording operation state with respect to a recordable optical disc, and provides the signal output from the equalizer to the tracking error detection section when the optical disc apparatus is in a reproduction operation state with respect to an optical disc of a reproduction-only type.

17. A signal processing apparatus used in a focus control apparatus, wherein
the focus control apparatus includes:
focusing means for forming an optical beam spot on a recording surface of an optical disc by focusing light beam on the recording surface of the optical disc,
moving means for moving the optical beam spot in a direction substantially perpendicular to the recording surface of the optical disc; and
photodetection means having a light receiving surface for detecting light reflected off the optical disc,
in which the light receiving surface is separated into a plurality of areas, and each of the plurality of areas is formed to generate a received light quantity signal in accordance with a received light quantity and to output the received light quantity signal, the signal processing apparatus comprising:
a filter section including a plurality of low-pass filters, in which each of the plurality of low-pass filters removes a component having a frequency equal to or higher than a predetermined cutoff frequency from a corresponding received light quantity signal among a plurality of the received light quantity signals output from the photodetection means;
a focus error detection section for generating a focus error signal indicating an amount of deviation of the optical beam spot from the recording surface of the optical disc by performing a predetermined calculation with respect to a plurality of signals output from the filter section; and
a focus control section for driving the moving means such that the optical beam spot follows the recording surface of the optical disc in accordance with the focus error signal.

18. A signal processing apparatus according to claim 17, further comprising a band control section for controlling the filter section such that the predetermined cutoff frequency becomes small as a recording speed for recording information on the optical disc increases.
